# EUROPEAN PATENT SPECIFICATION

(11) **EP 2 892 853 B1**
(45) Date of publication and mention of the grant of the patent: **14.09.2016**
(21) Application number: 13745640.6
(22) Date of filing: 02.08.2013
(51) Int. Cl.: C02F 1/28, B01J 41/10, C02F 1/48, C02F 1/42, C02F 101/10, C02F 101/20, C02F 101/38, B01J 20/04, B01J 20/06, B01J 20/10, B01J 20/28, B01J 20/32, B01J 21/08, B01J 23/745, B01J 27/236, B01J 35/00, B01J 35/02, B01J 35/10, B01J 37/04, B01J 39/02, B01J 39/10, B01J 41/02, B01J 47/00, B01J 49/00, B82Y 30/00, B01J 37/34

(54) **PARTICLE FOR RECOVERING AN ANION FROM AN AQUEOUS SOLUTION**
PARTIKEL ZUR RÜCKGEWINNUNG EINES ANIONS AUS EINER WÄSSRIGEN LÖSUNG
PARTICULE POUR RÉCUPÉRER UN ANION À PARTIR D'UNE SOLUTION AQUEUSE

(30) Priority: 07.09.2012 EP 12183587
(43) Date of publication of application: 15.07.2015
(73) Proprietor: Baden-Württemberg Stiftung gGmbH, 70174 Stuttgart (DE)
(72) Inventor: HUTTER, Frank, 80798 Munich (DE); GELLERMANN, Carsten, 97218 Gerbrunn (DE); MANDEL, Karl, 86984 Prem (DE)
(74) Representative: PATERIS Patentanwälte PartmbB
(86) International application number: PCT/EP2013/066288
(87) International publication number: WO 2014/037172

(56) References cited:
- EP-A1- 2 388 237
- WO-A2-2012/104639
- CN-A- 101 112 687
- CN-A- 101 274 847
- JP-A- 2005 263 596

## Description

### Field of the Invention

The invention concerns a particle for recovering an anion from an aqueous solution comprising a layered double hydroxide deposited on a surface of a magnetic microparticle. The invention further concerns a method for manufacturing a magnetic particle and a particle for recovering an anion from an aqueous solution obtainable by the method. The invention further concerns various uses of the particle.

### Background of the Invention

The increasing shortage of non-renewable raw materials, especially those of industrial importance, is a major concern world wide. Non-renewable raw materials include for example phosphorus, in form of phosphate, one of the most important elements for life. Phosphate builds up the backbone of DNA and is part of the energy carrier adenosine triphosphate in every cell. Agriculture relies heavily on phosphate as fertilizer which is needed by every plant to grow. However, the main source of phosphorus, rock-phosphate, is a non-renewable resource. By a steadily increasing demand, natural deposits are continuously depleted, and will contain lower phosphate concentrations and a higher content of impurities such as heavy metals in the future. If such sources are used, the consequence is a contamination of soil and eventually nourishment containing heavy metals.

Potential ways of recycling raw materials such as phosphate are intensively investigated. Waste water plants show a continuous flow-through of phosphate arising from fertilisers, animal and human excrement, industry, but also from natural sources such as rocks. Without efficient separation techniques, phosphate is discharged into lakes and rivers where it contributes to the growth of algae and increased water eutrophication. Therefore, recovery of phosphate from waste water prevents loss of a scarce resource and protects natural waters from pollution.

The prior art describes several methods for recovering phosphate from waste water with relatively high phosphate concentration by chemical or thermal treatment. All such methods are highly energy-consuming and often result in impure products. Moreover, these methods are not cost-effective, especially when phosphate concentrations are low, and their specificity for phosphate is poor so that contaminants are precipitated with the products.

To overcome these drawbacks, the use of ion exchange materials that directly and specifically bind phosphate is investigated. Potent phosphate binding ion exchange materials are so-called layered double hydroxides (LDHs) (Das et al., 2006; Chitrakar et al., 2010). LDHs typically consist of flakes in the sub µm to several 100 µm size range. The direct use of LDH in waste water would require a highly elaborate and tedious filtering procedure in order to remove LDH dispersed in the waste water before it exits the waste water plant. Sedimentation of dispersed LDH materials is also not effective since LDHs have a low density and a high surface potential leading to mutual repulsion. The use of LDH immobilized onto ion exchange columns prevents continuous waste water treatment due to the need of regenerating the ion exchange material.

A further approach under investigation is a separation of LDHs by combining them with magnetic particles. The resulting ion exchange particles may be applied to the waste water stream and, after a sufficient period of time for ion exchange, may be removed by magnetic separation techniques. To produce ion exchange particles, LDHs are first synthesized as nanoparticles and then combined with magnetic nanoparticles. However, this process requires considerable procedural efforts such as formamide treatment for delamination of LDH layers or hydrothermal treatment (so-called "aging") of LDH agglomerates. A different method for producing ion exchange particles is the precipitation of LDH onto magnetic nanoparticles. However, these particles show very low magnetism impeding their magnetic separation from waste water. Taken together, the need of elaborate LDH treatment and high gradient magnetic separation techniques renders existing ion exchange particles too costly and inefficient for recovering phosphate or other anions from waste water.

Therefore, a particle for recovering an anion from an aqueous solution is needed which can be magnetically separated in a simple, cheap and efficient manner and which can be manufactured by a time- and cost-effective method.

Further relevant prior art includes WO2012/104639, CN101112687, CN101274847, JP2005263596 and EP2388237.

### Summary of the Invention

In a first aspect, the invention is directed to a particle for recovering an anion from an aqueous solution comprising a magnetic material associated with a silica based layer forming a magnetic microparticle with a silica based surface, and a layered double hydroxide deposited on the surface of the microparticle.

In a second aspect, the invention is directed to a method for manufacturing a magnetic particle, comprising the steps of:
a) mixing a magnetic microparticle with a silica based surface in an aqueous solution at about pH 7 with a dispersion of layered double hydroxide at about pH 7 to obtain a mixture; and
b) ultrasonicating the mixture for depositing the layered double hydroxide on the surface of the microparticle.

In a third aspect, the invention is directed to a particle for recovering an anion from an aqueous solution obtainable by the method of the present invention.

In a fourth aspect, the invention is directed to the use of the particle for recovering an anion from an aqueous solution.

In a further aspect, the invention is directed to the use of the particle for catalysing a chemical reaction by heterogeneous catalysis.

In a further aspect, the invention is directed to the use of the particle as a carrier for a biochemical molecule, preferably an enzyme, immobilized on the layered double hydroxide.

### Brief description of the drawings

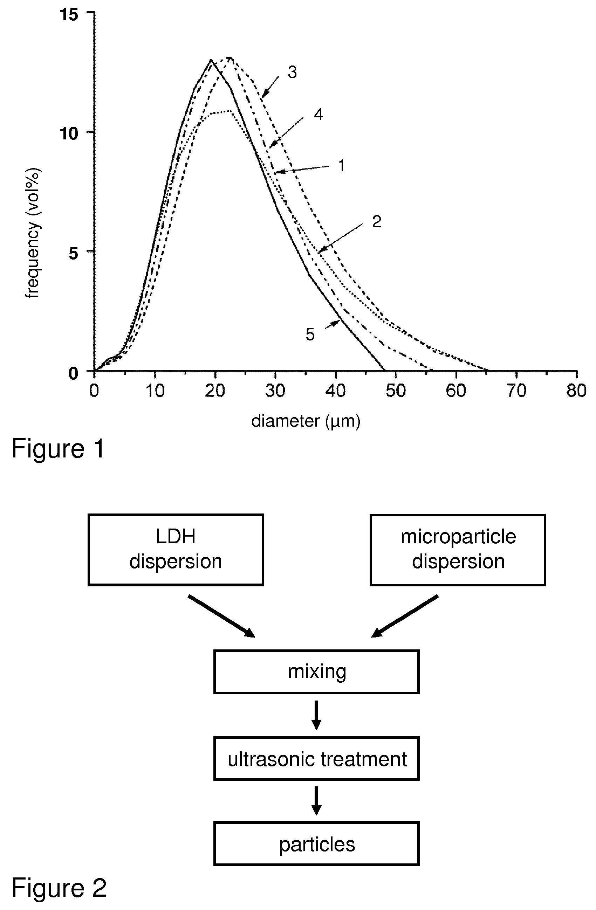

Figure 1 shows particle size distributions measured by Fraunhofer diffraction according to standard procedures on suspensions of superparamagnetic microparticles (5) and particles (1-4) with 20 wt% LDH of different compositions: MgAl LDH (1), MgAI-Zr LDH (2), MgFe-Zr LDH (3), and MgFe LDH (4). Distribution curves for particles with MgAl LDH (1) and particles with MgFe LDH (4) are superimposed.
Figure 2 shows a schematic representation of the method according to the invention for manufacturing magnetic particles.

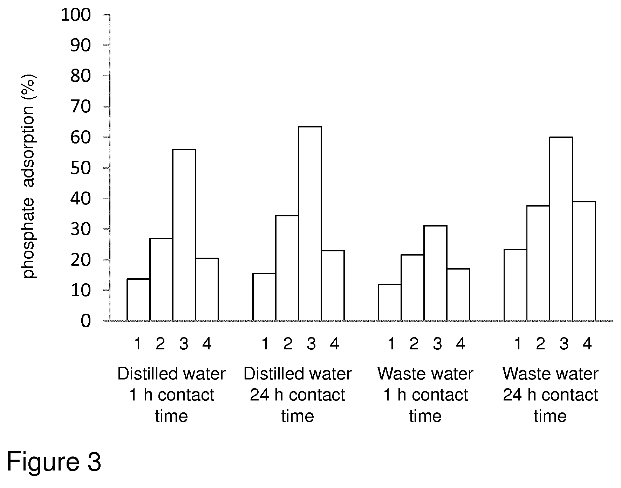

Figure 3 shows the recovery of phosphate from either distilled water or waste water containing 36.65 mg/l phosphate by phosphate adsorption to particles with different LDH compositions: MgAl LDH (1), MgAI-Zr LDH (2), MgFe-Zr LDH (3), and MgFe LDH (4). The contact time of the particles with water was either 1 hour or 24 hours.

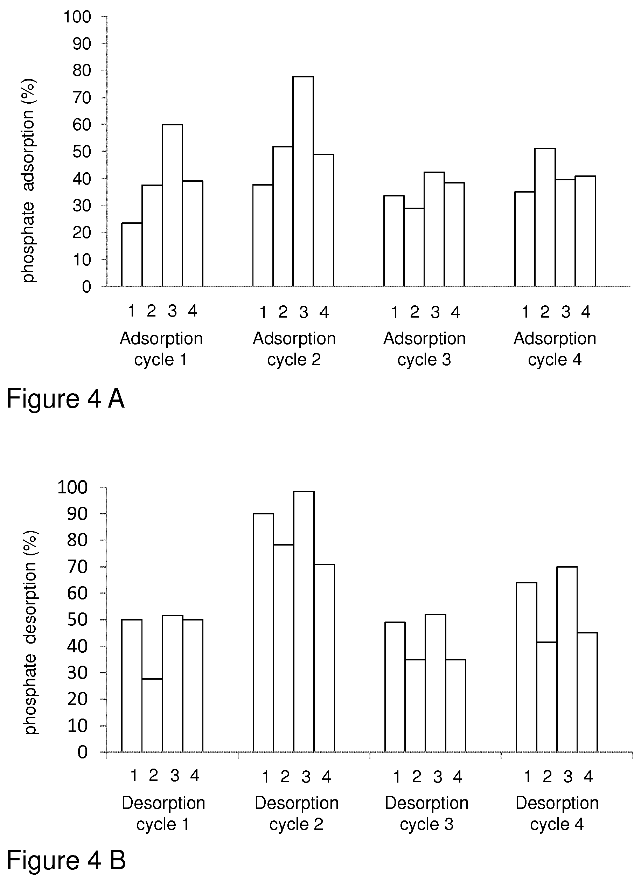

Figure 4 shows the performance of particles with different LDH compositions, namely MgAl LDH (1), MgAI-Zr LDH (2), MgFe-Zr LDH (3), and MgFe LDH (4), for up to four phosphate adsorption/desorption cycles. Phosphate recovery from waste water is indicated by phosphate adsorption to particles (Figure 4 A). Phosphate desorption indicates the retrieval of phosphate from the particles (Figure 4 B). The contact time of the particles with waste water and desorption solution (0.1 M NaOH, 2.0 M NaCl) was 24 hours per cycle, respectively.

### Detailed description of the invention

In a first aspect, the invention is directed to a particle for recovering an anion from an aqueous solution comprising a magnetic material associated with a silica based layer forming a magnetic microparticle with a silica based surface, and a layered double hydroxide deposited on the surface of the microparticle.

The particle can be used for recovering an anion from an aqueous solution. The term "anion" includes inorganic anions as well as organic anions that are soluble in water. The anion may have any size and any composition. The term "aqueous solution" refers to any solution in which the solvent is water. Any compound or plurality of compounds may be present in the aqueous solution, including water soluble substances that are dissolved in the solution as well as water insoluble compounds that are dispersed in the solution.

The particle comprises a magnetic material. The term "magnetic material" refers to any type of material that is magnetized upon application of an external magnetic field and is attracted by the gradient of a magnetic field, thereby becoming magnetically separable. For example, magnetic materials comprise ferromagnetic materials, such as iron, cobalt, nickel, aluminium nickel cobalt alloys, and nickel iron cobalt alloys, and ferrimagnetic materials, such as ferrites, magnetite (Fe₃O₄), Iodestone, and cobalt iron oxides.

The magnetic material is associated with a silica based layer. The term "silica based" refers to any substance comprising the element silicon as a silicon oxide. The term "layer" refers to any form of the silica based substance such as a film-like or a matrix-like form.

The magnetic material associated with the silica based layer forms a magnetic microparticle with a silica based surface. Association of the magnetic material with the silica based layer can be mediated in any manner and accomplished by any spatial arrangement that results in the formation of a magnetic microparticle with a silica based surface. For example, the magnetic material can be packed together inside the microparticle forming a magnetic core structure that is enclosed by the silica based layer. The magnetic material can also be distributed in the silica based layer, so that the silica based layer serves as matrix in which the magnetic material is embedded.

The term "magnetic microparticle" refers to a microparticle with a diameter of about 1 µm to about 100 µm that is magnetic and can be magnetically separated. The magnetic properties of the microparticle derive from the magnetic material comprised in the microparticle. For example, if the magnetic material is a superparamagnetic material, the microparticle is likewise superparamagnetic. The microparticle has a silica based surface that derives from the silica based layer associated with the magnetic material. The silica based surface gives rise to a negative zeta potential of the microparticle at neutral pH, i.e. a negative potential difference between the solution in which the microparticle is dispersed and the stationary layer of fluid attached to the dispersed microparticle.

The particle further comprises a layered double hydroxide deposited on the surface of the microparticle. The term "layered double hydroxide" (LDH) refers to a compound of the class of layered double hydroxides (LDHs), also known as anionic clays. LDHs form layered structures with positively charged layers and charge balancing anions located in the interlayer regions. Structurally, the prototype of a LDH is hydrotalcite [Mg_{0.75}Al_{0.25}(OH)₂](CO₃)_{0.125̇}·0.5H₂O which is similar to the brucite structure Mg(OH)₂ (Rives and Ulibarri, 1999). LDHs are commonly represented by the general formula [M²⁺₁₋ₓM³⁺ₓ(OH)₂]^{q+}(Aⁿ⁻)_{q/n}·*n*H₂O comprising divalent, trivalent, and in some cases even tetravalent metal cations. M²⁺ refers to divalent metal cations of the elements selected from the group consisting of iron, magnesium, zinc, tin, calcium, copper and nickel. M³⁺ refers to trivalent metal cations of the element iron or aluminium. Tetravalent metal cations can be those of the element zirconium. Aⁿ⁻ refers to any hydrated anion able to intercalate in the interlayer regions of an LDH, such as chloride, bromide, nitrate, carbonate, sulphate and phosphate. Since LDHs show selective intercalation properties and the anions located in the interlayer regions can generally be easily replaced, LDHs are preferably used as selective anion exchange materials.

In the particle, LDH is deposited on the surface of the microparticle. The term "deposition" refers to any type of adsorption that is mediated by physical interactions and not by formation of chemical bonds (so-called physisorption). LDH deposition on the surface of the microparticle shows only minor effects on size, size distribution and magnetism of the microparticle. For example, if the microparticle is superparamagnetic, the particle is also superparamagnetic. Since the microparticle can be magnetically separated, the particle is likewise magnetically separable.

By rendering LDH magnetically separable, an anion exchange particle is provided that can be magnetically separated from an aqueous solution in a simple, cheap and efficient manner by application of an external magnetic field.

Particle analysis by transmission electron microscopy performed by the inventors revealed that the majority of LDH layers are deposited horizontally on the microparticle surface. The horizontal assembly of LDH layers provides a good accessibility of the interlayer regions of LDH for anions. Thus, the spatial arrangement of LDH in the particle promotes a high anion exchange capacity of the particle. Further, the horizontal arrangement of LDH layers on the microparticle surface may contribute to the large specific surface area of the particle.

In a preferred embodiment, the particle has a content of layered double hydroxide of about 5 to about 65 wt%, preferably about 20 to about 60 wt%, more preferred about 20 wt% to about 40 wt%, most preferred about 20 wt% or about 40 wt%. While a high LDH content of the particle contributes to a high anion exchange capacity, a low LDH content improves the magnetic separability of the particle. Thus, the LDH content of the particle is selected with a view to the features of the particle that are most desired. On a laboratory scale a content of LDH of about 40 wt% is preferred. The inventors found that particles with about 40 wt% LDH show a high exchange capacity for recovering phosphate. For large-scale technical applications a content of LDH of about 20 wt% is preferred. Further to having an improved magnetic separability, particles with about 20 wt% LDH show an increased stability against shear forces compared to particles with about 40 wt% LDH. Stability of the particle against shear forces may be particularly important when particles are applied to a waste water stream in a waste water plant and have to withstand shear forces occurring in technical magnetic separators. The LDH content of the particle may also depend on the selected LDH composition. Further, the inventors found that when using an LDH having only divalent and trivalent metal cations, the amount of LDH that can be deposited onto the microparticle is limited at about 35 wt%. Particles with higher LDH contents were not stable against repeated washing.

In a preferred embodiment, the layered double hydroxide is selected from the group consisting of magnesium aluminium layered double hydroxide, magnesium iron layered double hydroxide, calcium aluminium layered double hydroxide, and calcium iron layered double hydroxide. These LDHs are suitable for specifically recovering phosphate or other phosphorus-containing anions such as pyrophosphate or triphosphate from aqueous solutions.

In a preferred embodiment, the layered double hydroxide comprises zirconium cations. The inventors found that the presence of zirconium increases the stability of LDH deposition on the microparticle surface. Therefore, higher amounts of LDH can be attached to the microparticle allowing a good compromise between magnetic separability and anion exchange capacity according to the LDH content of the particle.

In a preferred embodiment, the LDH is magnesium iron zirconium LDH. The inventors found that particles comprising magnesium iron zirconium LDH show a high degree of stability during repeated phosphate adsorption/desorption cycles. Further, such particles show a high selectivity for phosphate ions and perform particularly well in phosphate adsorption and desorption experiments indicating their high anion exchange capacity.

In a preferred embodiment, the layered double hydroxide is deposited on the surface of the microparticle by ultrasonication. Deposition of LDH by ultrasonic treatment leads to an attachment of LDH on the microparticle surface that is strong enough to prevent any LDH detachment upon magnetic separation of the particle. Further, deposition of LDH on the microparticle surface by ultrasonication increases the specific surface area of LDH so that the particle shows a high anion exchange capacity.

In a preferred embodiment, the particle has a specific surface area of about 10 to about 500 m²/g, preferably about 60 to about 350 m²/g, more preferred about 70 to about 250 m²/g, even more preferred about 80 to about 110 m²/g, most preferred about 90 to about 110 m²/g. The specific surface area is determined by N₂ adsorption using BET analyses. The inventors found that the specific surface area of particles with a content of 40 wt% LDH is 105 m²/g for magnesium iron zirconium LDH, 94 m²/g for magnesium iron LDH, and 106 m²/g for magnesium aluminium zirconium LDH. The specific surface area of a particle having 40 wt% magnesium aluminium LDH was found to be 232 m²/g. In comparison, the specific surface area of microparticles without LDH deposited on their surface is about 50 to about 75 m²/g and the specific surface area of pure LDH agglomerates is around 1 m²/g to around 7 m²/g. The large specific surface area of the particle leads to a high anion exchange capacity. Therefore, the particle is particularly advantageous for applications in ion exchange processes such as for recovering an anion from an aqueous solution. Even if anion concentrations are high, only a low number of particles is needed for an efficient anion recovery process.

In a preferred embodiment, the particle has a diameter of about 1 to about 100 µm, preferably about 1 to about 70 µm, more preferred about 1 to about 55 µm. The inventors found that particles of this size can be efficiently magnetically separated and redispersed. Further, this size range leads to a good surface to volume ratio of the particle. Particles with LDH are only slightly larger than microparticles without LDH since LDH deposition has only a minor effect on size and size distribution of the microparticles. The inventors found that the increase in particle diameter is about 1 to 2 µm compared to the microparticle before LDH deposition.

In a preferred embodiment, the magnetic material is a soft magnetic or a superparamagnetic material. Soft magnetic materials are ferromagnetic or ferrimagnetic materials that are magnetized when an external magnetic field is applied, but in contrast to hard magnetic materials have only very weak remanent magnetization after switching off of the magnetic field. Superparamagnetic materials are nanoparticles of a ferromagnetic or ferrimagnetic material that are sufficiently small to be composed of a single magnetic domain. This is typically the case for nanoparticles having a diameter below about 3 nm to about 50 nm, depending on material and temperature. Like other magnetic materials, superparamagnetic nanoparticles are magnetized when an external magnetic field is applied, but do not stay magnetized in the absence of an external magnetic field. The almost or total lack of remanent magnetization of soft magnetic and superparamagnetic materials, respectively, avoids particle aggregation by mutual attraction following magnetization in the field of a separator. Therefore, particles can be redispersed in an aqueous solution after removing them from the magnetic separator, enabling recycling of the particles. Further, soft magnetic materials as well as superparamagnetic materials show no or only minor energy loss associated with magnetic hysteresis. Thus, no or only a minor amount of energy is transformed into heat upon reversal of magnetism, keeping the temperature of the material stable.

Soft magnetic materials include for example ferrites, nickel iron alloys and cobalt iron alloys. Superparamagnetic materials include for example iron oxide nanoparticles such as magnetite nanoparticles.

In a preferred embodiment, the magnetic material is provided as magnetic nanoparticles.

In a preferred embodiment, the nanoparticles are magnetite (Fe₃O₄) nanoparticles, since they are widely used and can be easily obtained. Magnetite nanoparticles are superparamagnetic, allowing the redispersion of particles in an aqueous solution after removal of an external magnetic field.

In a preferred embodiment, the nanoparticles are embedded in a silica based matrix. Due to Brownian motion, it is not possible to separate dispersed superparamagnetic nanoparticles from their dispersion medium in the gradient of a magnetic field. The whole dispersion (ferrofluid) is moved by the field unless super strong magnets such as superconductors are used. The incorporation of superparamagnetic nanoparticles into a diamagnetic silica based matrix leads to microparticles that are strong magnetic carriers which can easily be extracted from an aqueous solution by magnetic separation and redispersed into the solution.

In a preferred embodiment, the silica based layer is made of silicon dioxide. Silicon dioxide is insoluble in water and in most acids. Microparticles with a silicon dioxide surface have a zeta potential of about -30 mV to about -40 mV at neutral pH. Amorphous silicon dioxide has a relatively high specific surface area, thus facilitating LDH adsorption onto the surface of the microparticle.

In a second aspect, the invention is directed to a method for manufacturing a magnetic particle, comprising the steps of:
a) mixing a magnetic microparticle with a silica based surface in an aqueous solution at about pH 7 with a dispersion of layered double hydroxide at about pH 7 to obtain a mixture; and
b) ultrasonicating the mixture for depositing the layered double hydroxide on the surface of the microparticle.

The ratio of LDH and microparticles that are used as starting materials for obtaining the mixture is selected according to the desired LDH content of the resulting particle. For example, if a content of about 40 wt% LDH of the particle is desired, the amount of LDH that is used is about 40 wt% and accordingly about 60 wt% microparticles are used. Table 2 shows that the LDH content of the resulting particles is comparable to the desired LDH content at manufacturing of the particle.

In a preferred embodiment, the same volumes of LDH and microparticle suspensions are applied and their respective concentrations are adjusted to yield the desired ratio of LDH and magnetic microparticles before mixing. As an example, 500 ml LDH suspension of about pH 7-8 with a concentration of 4.5 mg/ml LDH are mixed with 500 ml microparticle suspension of about pH 7-8 with a concentration of 18 mg/ml microparticles to obtain a particle with a content of about 20 wt% LDH. If the suspension of microparticles has a concentration of 6.75 mg/ml microparticles, a particle with a content of about 40 wt% LDH is obtained.

LDH is used as precipitated. The manufacturing of the particle according to the invention does not require any formamide treatment for delamination of LDH layers or hydrothermal treatment (aging) of LDH agglomerates. Hydrothermal treatment of LDH is commonly used to achieve sufficient crystallisation and sufficiently sized crystallites of LDH. Further, hydrothermal treatment of LDH leads to delamination of layered LDH agglomerates into fine nanosized LDH flakes and sheets (Xu et al., 2006). The disruption of LDH agglomerates by formamide and/or hydrothermal treatment was hitherto believed to be necessary for depositing LDH on a solid surface. However, surprisingly, the inventors found that hydrothermal treatment of LDH can be omitted for the method for manufacturing the particle according to the invention. According to the invention, LDH deposition on the surface of the microparticle is achieved by ultrasonicating the mixture of microparticles and LDH agglomerates. Since it is not necessary to separate the LDH agglomerates to nanosized sheets, LDH agglomerates can be used as precipitated without any formamide and/or hydrothermal treatment. The inventors found that the anion exchange capacity of the particle obtained by the method according to the invention is not affected by the lack of hydrothermal LDH treatment, rendering any aging steps of LDH dispensable. Since the time-intensive and elaborate process of formamide and/or hydrothermal treatment of LDH is not required, the method for manufacturing of the particle according to the invention allows obtaining particles in a fast and simple manner.

In LDHs the layers are positively charged. Their zeta potentials are strongly positive over a wide range of pH. At neutral pH, LDH agglomerates have a positive zeta potential of about +30 mV to about +40 mV. In contrast to this, the magnetic microparticles show a negative zeta potential over a very wide range of pH as their surface is completely composed of a silica-based compound. For example, microparticles with a silicon dioxide surface have a zeta potential of about -30 mV to about -40 mV at neutral pH. Based on their zeta potentials, a strong attraction between the LDHs and the microparticles is likely to occur. However, after simply mixing a dispersion of LDH with a dispersion of microparticles at pH 7 on a lab scale for depositing LDH onto the microparticles without any ultrasonic treatment, only a fraction of the LDH could be magnetically separated. The inventors believe that the non-separable fraction of LDH detaches from the microparticle surface during application of an external magnetic field to magnetically separate the particles.

Deposition of LDH onto the microparticles by ultrasonic treatment according to the invention leads to complete magnetic separability of the particles. Surprisingly, the attachment of LDH on the microparticle surface following ultrasonic treatment is strong enough to prevent LDH detachment from the microparticle when the particle is dispersed and magnetically separated again, even in cycling repetitions. The particle can be entirely separated in the gradient of an external magnetic field. Therefore, ultrasonic LDH deposition on magnetic microparticles provides a powerful tool for rendering LDH magnetically separable. This allows a wide range of applications of the particle according to the invention since it can be effectively removed from any aqueous solution after the desired effect such as anion exchange has taken place. For example, particles can be added to phosphate-containing waste water and magnetically separated after sufficient time for phosphate exchange. Given that the entire particles according to the invention can be magnetically separated without LDH detachment during magnetic separation, a filtering procedure or other purification efforts that would be necessary to eliminate detached LDH from the solution is dispensable.

Further, deposition of dispersed LDH agglomerates onto microparticles by ultrasonic treatment increases the specific surface area of LDH immensely. Thus, the particle according to the invention provides an enlarged contact area of LDH with anions present in the solution in which the particle is dispersed. The enlarged contact area enhances the accessibility of LDH for anions that can intercalate in the interlayer regions. Therefore, the increase in specific surface area of the particle according to the invention improves anion exchange capacity of the particle.

According to the invention, LDH is deposited on the microparticle by physisorption, i.e. the deposition of LDH on the surface of the microparticle is mediated by physical interactions and not by formation of chemical bonds. Thus, the structure of LDH is not significantly altered during the manufacturing process of the particle according to the present invention. As a consequence, structural and functional characteristics of LDH such as its anion exchange function are preserved in the particle and open a broad range of its applications.

In a preferred embodiment, the silica based surface of the microparticle is a silicon dioxide surface. Amorphous silicon dioxide has a relatively high specific surface area, thus facilitating LDH adsorption onto the surface of the microparticle.

The method for manufacturing the particle can be performed in batch process or in continuous flow process. In batch process, the microparticle dispersion is preferably mixed with the LDH dispersion under stirring. Subsequently, the mixture is placed into an ultrasonic bath. An ultrasonic bath is readily available in standard laboratories and simple to use.

If the method for manufacturing the particle is performed in continuous flow process, the microparticle dispersion and the LDH dispersion are preferably pumped through tubes using a peristaltic pump into a Y-shaped gas tube connection as continuous flow reactor. Flow rate can be set to about 100 ml/min. The mixed dispersions are preferably routed into a continuous flow ultrasonic cell for ultrasonicating.

The method for manufacturing the particle is very simple and suitable for large-scale applications. It provides a fast and cost-effective way for synthesizing magnetically separable particles by which LDH is rendered magnetically separable.

The duration of mixing in step a) can range from about 5 sec to about 10 min. The duration of ultrasonicating in step b) can range from about 5 sec to about 1 hour. The duration of each of the steps is preferably short, such as in a range from about 30 sec to about 5 min. If ultrasonication is performed in an ultrasonic bath, the mixture is preferably ultrasonicated for about 100 sec. Short durations of mixing the microparticle dispersion with the LDH dispersion and/or ultrasonicating the mixture lead to a fast completion of the manufacturing process, allowing the production of the particle in a time-efficient manner. The fast production process also saves energy for operating stirring and ultrasonic devices. Thus, the method is not only fast but also cost-efficient and ecologically friendly.

In a preferred embodiment, step a) of the method for manufacturing a magnetic particle is performed for about 60 to about 100 seconds, preferably for about 100 seconds. This short period of time is sufficient to ensure a sufficient mixing of the microparticle with the LDH dispersion.

In a preferred embodiment, step b) of the method for manufacturing a magnetic particle is performed in a continuous flow ultrasonic cell, preferably for about 5 seconds. The continuous flow of the mixture through the continuous flow ultrasonic cell allows the method according to the invention to be carried out continuously. The method can thus be up-scaled and adapted for industrial applications, such as for the manufacturing of particles for waste water plants. The duration of ultrasonication of the mixture can be very short, such as about 5 seconds. This is particularly preferred if a continuous flow ultrasonic cell is used.

In a preferred embodiment, step a) and/or step b) of the method for manufacturing a magnetic particle is performed at room temperature, preferably step a) and step b) are performed at room temperature. Therefore, the energy demand of the method remains low and particles are manufactured in a cost-efficient manner.

In a preferred embodiment, the dispersion of layered double hydroxide is synthesized by stirring metal salts, preferably metal chlorides, into sodium hydroxide. For example, the respective metal salts for each LDH are first dissolved in 100 ml deionised water which is then slowly added to 400 ml 0.15 M sodium hydroxide (pH 10) under stirring at about 300 rpm. The molar ratio of (M²⁺ and M³⁺) or (M²⁺ and M³⁺ and M⁴⁺) to sodium hydroxide is preferably about 1 to 2. The use of metal chlorides promotes the intercalation of chloride anions into LDH which is favorable for an anion exchange with phosphate.

In a preferred embodiment, the stirring is performed for about 5 minutes at room temperature. Air protection, pH variations or aging steps are not required during LDH synthesis according to the invention. Thus, LDHs are provided by a fast and simple reaction.

LDH is synthesized in the absence of the microparticle and results in a dispersion of LDH agglomerates. By adjusting the pH of the LDH dispersion to about 7 the LDH synthesis reaction is terminated before the LDH dispersion is mixed with the microparticle.

In a preferred embodiment, pH adjustment is performed using hydrochloric acid. The use of hydrochloric acid promotes the intercalation of chloride anions into LDH which is favorable for an anion exchange with phosphate.

In a preferred embodiment, the microparticle is provided as a microparticle regained from a particle by treating the particle at a pH of about 0.5 to about 3 for detaching layered double hydroxide from the surface of the microparticle. Since LDH deposition on the microparticle does not involve the formation of chemical bonds, the microparticle as carrier is preserved. The process of LDH deposition can be reversed by acidic treatment of the particle. For example, if a decrease in anion exchange capacity of the particle is observed, disposed LDH can be disintegrated by treating the particle at a pH of about 0.5 to about 3. By disintegration of LDH, an unmodified microparticle is regained. After magnetic separation of the microparticle from the acidic solution, the microparticle can be re-coated by fast and simple mixing with new LDH followed by ultrasonication of the mixture. The simple removal and replacement of LDH allows continuous re-use of the microparticle. Thus, time and costs for the production of new microparticles are saved.

In a third aspect, the invention is directed to a particle for recovering an anion from an aqueous solution obtainable by the method of the present invention.

In a fourth aspect, the invention is directed to the use of the particle for recovering an anion from an aqueous solution. LDHs are selective anion exchange materials since they show selective intercalation properties and the anions located in the interlayer regions can generally be easily replaced. The particle renders LDH magnetically separable and provides a high anion exchange capacity. For recovering an anion from an aqueous solution, the particle is applied to the solution and, after a sufficient period of time for anion exchange, it is removed from the solution by magnetic separation. After magnetic separation, the particle can easily be regenerated and re-used many times.

In a preferred embodiment, the anion is a phosphate anion. Phosphate is a scarce resource that needs to be recovered from waste water for recycling but also to prevent eutrophication of natural waters. Depending on LDH composition, the particle shows a high specificity for phosphate. Therefore, no contaminants are recovered together with phosphate and phosphate can be retrieved from the particles as a pure product. The inventors found that only 10 minutes of contact time of the particles with phosphate-containing water at a pH of about 4.5 to 5.0 is sufficient to achieve adsorption of 90% of the phosphate to the particles.

In a preferred embodiment, the anion is retrieved from the particle by ion exchange. The particles can be easily regenerated and re-used due to the reversible adsorption of anions by LDH. Regeneration of the LDH anion exchangers of particles is achieved by retrieval of the anion by incubating the particles in a suitable desorption solution. Retrieved phosphate is present in concentrated form in the desorption solution and available for recycling or disposal. After magnetic separation from the desorption solution, particles can be used again, for example they can be re-dispersed in waste water, which saves time and costs for the production of new particles.

In a preferred embodiment, the desorption solution comprises sodium hydroxide and/or sodium chloride. The concentration of sodium hydroxide is preferably in the range from about 0.1 M to about 3 M. Sodium chloride concentration is preferably in the range from about 2 M to about 4 M. For example, the desorption solution is a solution of 1 M NaOH and 2 M NaCl at a pH of about 13, and particles are incubated therein for about 30 minutes. After only 10 minutes of incubation time of particles in the desorption solution, desorption is almost completed.

The inventors found that even after 15 cycles of phosphate adsorption/desorption with contact times for complete adsorption and desorption set to 24 h, 75% of the cumulatively adsorbed phosphate was retrieved from the particles.

In a preferred embodiment, the aqueous solution is waste water. Due to the high anion adsorption capacity, the magnetic separability and the simple regeneration of the particles, a cost- and energy-efficient process for anion recovery from waste water is facilitated. As particle regeneration does not require any disruption of waste water flow through a waste water plant, the particles can be applied in a continuous process of waste water treatment. The recovery of anions such as phosphate from waste water is economically and environmentally important as it facilitates recycling of non-renewable raw materials and protects lakes and rivers from pollution.

Depending on their composition, LDHs can not only intercalate simple inorganic anions such as chloride or phosphate, but also organic anions such as benzoate or succinate, and complex biomolecules such as DNA. Thus, minor modifications of the LDH composition of the particle enable the recovery of different anions. Thus, the particles have a broad spectrum of applications in waste water treatment and recycling. For example, the particle can be used for the magnetic separation of hazardous substances, such as toxic arsenate (AsO₄³⁻). In many Asian countries drinking water contaminated with highly toxic arsenic is threatening the life of millions of people. The particle can also be used to fight heavy metal contamination in waters that poses a serious environmental problem endangering animals, plants and humans.

In a further aspect, the invention is directed to the use of the particle for catalysing a chemical reaction by heterogeneous catalysis. Particles with LDH that contains suited cations can be used as catalysts for a multitude of reactions, providing magnetic and thus retrievable catalyst particles for heterogeneous catalysis. Examples for LDH-catalysed reactions include vegetable oil transesterification reactions that play an important role in the production of biodiesel, such as the reaction of soybean oil with methanol.

In a further aspect, the invention is directed to the use of the particle as a carrier for a biochemical molecule, preferably an enzyme, immobilized on LDH. The term "biochemical molecule" includes any molecule present in nature or artificially modified variants of a naturally occurring molecule. For example, biochemical molecules comprise proteins, such as enzymes and nucleic acids, such as RNA and DNA. The immobilization of such molecules on the particle is typically mediated by intercalation of the molecule into the interlayer regions of LDH. Enzymes that can be immobilized on LDH include for example acetylcholinesterase, horseradish peroxidase, urease, glucose oxidase, fructose-6-phosphate aldolase, and diamine oxidase. Other examples of biochemical molecules that can be immobilized on LDH include iron porphyrins. The particle carrying a biochemical molecule can be used in many different technical fields such as for catalysing a chemical reaction or for biosensing applications.

In a further aspect, the invention is directed to the use of the particle as a carrier for an artificial molecule, preferably a medicament, immobilized on the layered double hydroxide.

### Examples

### 1. Materials and methods

### 1.1 Materials

Iron(III) chloride hexahydrate (FeCl₃·6H₂O, 99 %+), iron(II)chloride tetrahydrate (FeCl₂·4H₂O, 99 %+), magnesium chloride hexahydrate (MgCl₂·6H₂O, 99 %+), aluminium chloride hexahydrate (AlCl₃·6H₂O, 99 %), zirconium(IV) oxychloride octahydrate (ZrOCl₂·8H₂O, 99,5 %), hydrochloric acid (HCl, 36 wt %), sodium hydroxide (NaOH pellets) were purchased from Sigma-Aldrich, Germany, and used without further purification. Ammonium hydroxide solution (NH₄OH, 25 wt %) in water, nitric acid (HNO₃, 1 M, diluted from a 53 wt % solution), sodium silicate (water glass) solution (36 wt %, molar ratio of SiO₂:Na₂O = 3:1, Na₂Si₃O₇) were obtained from Fischar Chemicals, Germany, and used without further purification. Orthophosphoric acid (H₃PO₄, 85%) was purchased from Merck KGaA, Germany.

### 1.2 Synthesis of superparamagnetic microparticles

8.64 g (32 mmol) of FeCl₃·6H₂O and 3.18 g (16 mmol) of FeCl₂·4H₂O were dissolved in 100 ml deionised water without any protection from oxygen environment at 20°C. 20 ml 25 wt% aqueous ammonium hydroxide solution was diluted with 100 ml water. The two solutions were mixed under stirring. The precipitate (approx. 3.9 g) was washed once (dispersing it in water and magnetically separating again) and suspended in 120 ml deionised water. The suspension was mixed with 120 ml nitric acid (0.66 M). The sol was further stabilised by carboxylic acid. The resulting functionalised nanoparticle sol had a pH of 1 to 2.

To the functionalised nanoparticle sol 88 ml of 25 wt % ammonium hydroxide diluted in 80 ml deionised water was added. The mixture was heated to 70 °C under air and stirring. Sodium silicate solution (molar ratios NH₄OH : HNO₃ : Na₂Si₃O₇ = 27:1:0.4) was added slowly through a syringe needle. The reaction mixture was stirred for an additionally 5 min at 70 °C. Subsequently, the product was magnetically removed and washed.

### 1.3 Synthesis of layered double hydroxides via fast precipitation

Metal ion precursor solutions for the different LDHs were prepared by dissolving the following metal salts in 100 ml deionised water:
MgAl LDH: 4.16 g (20 mmol) MgCl₂·6H₂O and 2.41 g (10 mmol) AlCl₃·6H₂O.
MgAI-Zr LDH: 3.65 g (18 mmol) MgCl₂·6H₂0, 0.72 g AlCl₃·6H₂O (3 mmol) and 0.98 g (3 mmol) ZrOCl₂·8H₂O.
MgFe-Zr LDH: 3.66 g (18 mmol) MgCl₂·6H₂O, 0.81 g (3 mmol) FeCl₃·6H₂O and 0.98 g (3 mmol) ZrOCl₂·8H₂O.
MgFe LDH: 3.66 g (18 mmol) MgCl₂·6H₂O and 1.62 g (6 mmol) FeCl₃·6H₂O.

Each precursor solution was slowly added to 400 ml 0.15 M NaOH (pH 10) under stirring (300 rpm). The resulting turbid suspension was stirred for 5 min. Then dispersion was adjusted to pH 7 with hydrochloric acid to stop the reaction and for further processing. For analyses of LDH, the product was centrifuged and washed twice. MgAl and MgFe LDH systems were prepared and doped with Zr ions (MgAI-Zr and MgFe-Zr LDH) to improve their selectivity as phosphate ion exchangers.

### 1.4 Deposition of LDHs on superparamagnetic microparticles

Magnetic microparticles were dispersed in 500 ml water. The concentration was adapted to the concentration of the respective LDH suspension (500 ml from the reaction suspension) to yield the desired ratio of LDH and magnetic microparticles.

In batch process, the two dispersions were mixed for 60 s under stirring and subsequently placed into an ultrasonic bath (Bandelin Sonorex Super RK103 Ultrasonic bath: 180 W, 35 kHz) for 100 s.

In a continuous deposition process, the two dispersions were pumped through silicon tubes (0 5 mm) using a peristaltic pump (Istatec BV-GES) into a Y-shaped gas tube connection (total length 31 mm) as continuous flow reactor. Each arm (0 3 mm) of the connector had a length of 18 mm, the two supporting arms met at an angle of 55°. The flow rate in each supporting channel was 100 ml/min. The mixed suspensions flew through the outlet tube (50 cm, 200 ml/min) into a continuous flow ultrasonic cell. In this device (Branson Sonifier II Modell 450 continuous ultrasound flow cell) the suspension was sonified (duty cycle of 50 %, resulting output power for the used ½" sonifier horn of 110 W, approximately 5 s exposure time to the reactants).

### 1.5 Analyses

Scanning electron microscopy (SEM) of the LDH materials, superparamagnetic microparticles and particles was carried out with a Zeiss Supra 25 SEM at 3 keV. Energy dispersive X-ray analyses (EDX) of their compositions were done with 15 keV at a working distance of 8 mm.

Samples for transmission electron microscopy (TEM) were obtained by embedding particles in an epoxy resin, generating a flat surface by cross section polishing (JEOL Cross Section Polisher SM-09010) and cutting a lamella with a focused Ga ion beam (FEI Company Focused Ion Beam Quanta 200 3D). TEM and high resolution TEM (HRTEM), scanning transmission electron microscopy (STEM) with energy dispersive X-ray analysis (STEM-EDX) were carried out using a JEOL JEM2010.

Zeta potentials were measured in dependence of pH value (2-12) on a Malvern Instruments Zeta Sizer Nano. The pH was adjusted by 0.1 M NaOH and 0.1 M HCl.

Particle sizes were determined via Fraunhofer diffraction (FD) with a Malvern Mastersizer S according to standard procedures.

X-ray diffraction (XRD, Phillips PW 1730/10) was performed on vacuum tried powder samples. Indication of reflexes was carried out relying on The International Centre for Diffraction Data Powder Diffraction Files Database and on published work (Das et al., 2006; Chitrakar et al., 2010; Rives et al., 1999).

Specific surface areas were measured by N₂ adsorption using BET analyses following DIN66131 with a Quantachrome Instruments Autosorb-3B.

Chemical compositions were analysed by inductive coupled plasma optical emission spectroscopy (ICP-OES) using a Varian Vista-Pro CCD Simultaneous ICP-OES after digestion of samples in hot hydrofluoric acid.

Differential thermogravimetric analyses (DTA-TG) were carried out from room temperature to 600 °C with a Netzsch STA 449 C Jupiter DTA-TG coupled with a Netzsch Aeolos QMS403C mass spectrometer.

Magnetic properties of vacuum dried particles were studied with a vibrating sample magnetometer (VSM, VersaLabTM 3T, Cryogenfree Vibrating Sample Magnetometer), cycling the applied field from -30 to +30 kOe for two times with a step rate of 100 Oe/s. Detailed analyses were carried out by cycling the applied field from -5 to +5 kOe with 5 Oe/s. The temperature was set to 293 K (20 °C, room temperature).

Ortho-phosphate concentrations in all samples were measured photometrically according to the ammonium molybdate spectrometric method (DIN EN ISO 6678:2004):
Antimony (Sb) and molybdate (MoO₄²⁻) ions were added as reagents, which react with phosphate ions and form an antimony-phosphorus-molybdate complex. This complex is reduced with ascorbinic acid to a deeply colored molybdenum blue complex.
Subsequently the concentration of [PO₄]-P is determined photometrically at a wavelength of 880 nm.

### 2. Results

### 2.1 Analysis of microparticles

Superparamagnetic nanoparticles of magnetite (Fe₃O₄) are incorporated into a silica matrix. Scanning electron micrographs (SEM) of these microparticles revealed that their size ranges from about 1 to about 50 µm. The microparticles are superparamagnetic (with 30 emu/g saturation magnetization) and have a relatively large surface area of about 50 to about 75 m²/g. The particles surface is composed of amorphous silica. These microparticles were used as magnetic carriers for the layered double hydroxides (LDH).

### 2.1 Analysis of LDHs

The LDHs were analysed by differential thermal analyses - thermogravimetry coupled with mass spectroscopy (DTA-TG-MS) and inductively coupled plasma - optical emission spectroscopy (ICP-OES). All LDH samples showed two endothermic peaks between about 40 to 200 °C and between about 300 to 500 °C. MS revealed loss of H₂O only (adsorbed and interlayer water) up to about 200 °C. From thermogravimetry (TG) the water content of a LDH is estimated. Up to 500 °C H₂O and CO₂ are lost. Between 300 and 500 °C, dehydroxylation of LDH and decomposition of interlayer carbonate were observed. At higher temperatures also HCl was lost. The ZrOCl₂ precipitation showed only loss of H₂O up to about 400 °C. An exothermic peak observed between 450 °C to 500 °C is attributed to crystallisation which takes place upon rapid release of H₂O from bound hydroxyls.

By ICP-OES the content of Fe, Zr, Mg, Al and Cl in the samples was measured. The summarized masses of all metal oxides and chloride plus the weight loss (up to 500 °C) determined by TG was set to 100 %. Thereby atomic ratios of the LDHs were calculated and inserted in the general formula

[M²⁺_{(1-x-y)}M³⁺ₓM⁴⁺_{y}(OH)₂] [interlayer anion]⁻_{(x+2y)} · z [interlayer H₂O]

H₂O, Cl⁻ and CO₃²⁻ were assumed as interlayer compounds. Chloride content is given by ICP analysis. Carbonate was only measured qualitatively and quantitatively calculated from the charge balance of the LDH. All weight loss up to 200°C was attributed to the total water content of the LDH. It is not possible to distinguish between adsorbed and interlayer water. In table 1, the atomic ratio in the precursor compounds can be seen in comparison to the calculated values. There are some minor differences between stochiometric ratios of precursors and in products.

**Table 1: Derived LDH formulae in comparison to precursor ratios.**

| LDH type | Precursor metal ratio | Determined formula |
|---|---|---|
| MgAl | Mg_{0.67}Al_{0.33} | [Mg_{0.57}Al_{0.43}(OH)₂][Cl_{0.13}(CO₃)_{0.15}·1.27H₂O] |
| MgAI-Zr | Mg_{0.75}Al_{0.125}Zr_{0.125} | [Mg_{0.67}Al_{0.15}Zr_{0.18}(OH)₂][Cl_{0.11}(CO₃)_{0.20}·1.18H₂O] |
| MgFe-Zr | M9_{0.75}Fe_{0.125}Zr_{0.125} | [Mg_{0.69}Fe_{0.14}Zr_{0.17}(OH)₂][Cl_{0.07}(CO₃)_{0.205}·1.15H₂O] |
| MgFe | Mg_{0.67}Fe_{0.33} | [Mg_{0.72}Fe_{0..28}(OH)₂][Cl_{0.10}(CO₃)_{0.09}·1.09H₂O] |

Fraunhofer diffraction and scanning electron microscopy showed that LDHs consist of agglomerated flakes of 1 to 60 µm in size. In the transmission electron microscope hexagonally shaped crystallites, about 100 nm laterally sized, could be seen.

### 2.2 Size distribution of particles

Particle size distributions were measured by Fraunhofer diffraction on suspensions of superparamagnetic microparticles and particles with 20 wt% LDH. Measurements of particles revealed that they are slightly larger than the magnetic microparticles (Figure 1). Ultrasonic treatment on an LDH suspension showed only very slightly reduced agglomerate sizes. Therefore, the inventors believe that by ultrasonic treatment LDH agglomerates break and re-arrange, but are deposited as distributed parts on magnetic microparticles, if these are present.

### 2.3 LDH content of particles

Deposition of LDH on the superparamagnetic microparticles was confirmed by X-ray diffraction of washed, magnetically separated and dried particles. Reflexes of LDH and for magnetite could be found.

The LDH content in particles could be varied (20, 40, 60 wt%). After ultrasonic deposition particles were magnetically separated with a handheld magnet and washed twice. Only MgAl-LDH was washed off if more than 20 wt% LDH was initially provided. A determination of LDH load on particles was conducted from DTA-TG measurements and vibrating sample magnetometer measurements (VSM).

From DTA-TG measurements, total weight loss (in %) up to 500 °C of pure superparamagnetic microparticles (B) was compared to weight losses of pure LDH (A) and particles (C). The fraction x of LDH on the particle can be calculated:

A·x + B·(1-x) = C

Using VSM, saturation magnetization of superparamagnetic microparticles and particles can be compared. Loss of magnetization per mass is caused by the added LDH content. Pure LDHs without Fe behave diamagnetically (saturation magnetization at 3 T under 0.5 emu/g). Fe containing LDHs are weakly paramagnetic (MgFeZr-LDH saturation magnetization at 3 T is 0.6 emu/g, MgFe-LDH 1.6 emu/g). This contributions lead to a maximal error of 5% for the LDH content.

LDH weight fractions at the manufacturing of the particles and determined by DTA-TG and VSM measurements are given in table 2. Deviations of measured values from values at manufacturing are minor. There are no considerable losses of LDH during deposition procedure.

**Table 2: LDH weight fraction (in %) in particles determined from DTA-TG and VSM measurements compared to LDH weight fraction at manufacturing**

| LDH type | LDH wt% at manufacturing | VSM | DTA-TG |
|---|---|---|---|
| MgAl | 20 | 19 | 21 |
| MgFe | 40 | 47 | 40 |
| MgAI-Zr | 40 | 52 | 49 |
| MgFe-Zr | 20 | 22 | 18 |
| MgFe-Zr | 40 | 43 | 41 |
| MgFe-Zr | 60 | 63 | 60 |
| MgFe-Zr | 20 | 18 | 16 |

### 2.4 Specific surface area of particles

All LDHs considered in this work have specific surface areas (N₂ adsorption, BET method) of 1 to 7 m²/g, superparamagnetic microparticles 50 to 75 m²/g, particles 90 to 106 m²/g (for all types of LDH with a fraction of 40 wt% LDH of the particle). The particle with MgAl-LDH was even measured to have 232 m²/g. This increase in surface areas indicates a deposition of dispersed LDH agglomerates onto the superparamagnetic microparticles by ultrasonic treatment.

### 2.5 Phosphate recovery by particles

Experiments for phosphate recovery with the different particles were performed in distilled water and in real municipal waste water (effluent of the Wastewater Treatment Plant for Education and Research, ISWA, University of Stuttgart, Germany). The respective initial phosphate concentrations were adjusted to 10 mg/l [PO₄]-P (36.65 mg/l PO₄³⁻, corresponding 100 %) with phosphoric acid H₃PO₄. All water samples had a pH in the neutral range of 7 to 8. Particle concentrations were arbitrarily adjusted to a corresponding LDH concentration of 200 mg/L.

After suspending the particles in 100 ml of the solutions for a given contact time (20 °C, stirring), particles were separated in the field gradient of a permanent magnet. The remaining phosphate concentrations were measured photometrically according to the ammonium molybdate spectrometric method. Independent of water and contact time the particles with MgFe-Zr LDH showed the highest first adsorption (Figure 3).

Regeneration of LDH ion exchangers (desorption) of particles was performed in 100 ml solution of 0.1 M NaOH and 2.0 M NaCl. After magnetic separation, particles could be used again. In recycling experiments with particles contact times for complete adsorption and desorption were set to 24 h, arbitrarily.

In real waste water, after the first two desorption steps particles with MgFe-Zr LDH performed best (highest adsorptions, Figure 4 A), however, also MgAI-Zr LDH and MgFe LDH particles showed good performance. Particles with MgFe-Zr LDH showed the highest desorption in steps 1 to 4 (Figure 4B, 100 % corresponds to all phosphate initially adsorbed on the particles, being desorbed into the regeneration solution). For all LDH samples, no clear performance drop was observed during the recycling tests.

The LDH particles were finally compared in their [PO₄]-P uptake (in mg) per g LDH on the particles after 24 h adsorption in waste water. The particles with MgFe-Zr LDH showed an adsorption of 30 mg [PO₄]-P per g LDH, followed by MgFe LDH and MgAI-Zr LDH particles with approximately 20 mg/g. The Zr-based system showed an adsorption of 15 mg/g and the MgAl LDH particles of 12 mg/g. Thus, the Zr doping of a MgFe LDH is most promising for a high and selective uptake of phosphate in waste water.

### References

Chitrakar R, Tezuka S, Hosokawa J, Makita Y, Sonoda A, Ooi K, Hirotsu T. Uptake properties of phosphate on a novel Zr-modified MgFe-LDH(CO3). J Colloid Interface Sci. 2010;349:314-320.
Das J, Patra DS, Baliarsingh N, Parida KM. Adsorption of phosphate by layered double hydroxides in aqueous solutions. Appl Clay Sci. 2006;32:252-260.
Rives V and Ulibarri MA. Layered double hydroxides (LDH) intercalated with metal coordination compounds and oxometalates. Coord Chem Rev. 1999;181:61-120.
Xu ZP, Stevenson GS, Lu CQ, Lu GQ, Bartlett PF, Gray PP. Stable Suspension of Layered Double Hydroxide Nanoparticles in Aqueous Solution. J. Am. Chem. Soc, 2006;128:36-37.

## Claims

1. A particle for recovering an anion from an aqueous solution comprising a magnetic material associated with a silica based layer forming a magnetic microparticle with a silica based surface, and a layered double hydroxide deposited on the surface of the microparticle.

2. The particle of claim 1, wherein the particle has a content of layered double hydroxide of about 5 to about 65 wt%, preferably about 20 to about 60 wt%, more preferred about 20 wt% to about 40 wt%, most preferred about 20 wt% or about 40 wt%.

3. The particle of claim 1 or 2, wherein the layered double hydroxide is deposited on the surface of the microparticle by ultrasonication.

4. The particle of any of claims 1 to 3, wherein the particle has a specific surface area of about 10 to about 500 m²/g, preferably about 60 to about 350 m²/g, more preferred about 70 to about 250 m²/g, even more preferred about 80 to about 110 m²/g, most preferred about 90 to about 110 m²/g.

5. The particle of any of claims 1 to 4, wherein the particle has a diameter of about 1 to about 100 µm, preferably about 1 to about 70 µm, more preferred about 1 to about 55 µm.

6. The particle of any of claims 1 to 5, wherein the magnetic material is a soft magnetic or a superparamagnetic material.

7. A method for manufacturing a magnetic particle, comprising the steps of:
a) mixing a magnetic microparticle with a silica based surface in an aqueous solution at about pH 7 with a dispersion of layered double hydroxide at about pH 7 to obtain a mixture; and
b) ultrasonicating the mixture for depositing the layered double hydroxide on the surface of the microparticle.

8. The method of claim 7, wherein step a) Is performed for about 60 to about 100 seconds, preferably for about 100 seconds.

9. The method of claim 7 or 8, wherein step b) is performed In a continuous flow ultrasonic cell, preferably for about 5 seconds.

10. The method of any of claims 7 to 9, wherein step a) and/or step b) is performed at room temperature, preferably step a) and step b) are performed at room temperature.

11. The method of any of claims 7 to 10, wherein the dispersion of layered double hydroxide is synthesized by stirring metal salts, preferably metal chlorides, into sodium hydroxide, the stirring is preferably performed for about 5 minutes at room temperature.

12. Use of the particle of any of claims 1 to 6 for recovering an anion, preferably a phosphate anion, from an aqueous solution.

13. Use of the particle of any of claims 1 to 6 for catalysing a chemical reaction by heterogeneous catalysis.

14. Use of the particle of any of claims 1 to 6 as a carrier for a biochemical molecule, preferably an enzyme, immobilized on the layered double hydroxide.

## Patentansprüche

1. Partikel zum Rückgewinnen eines Anions aus einer wässrigen Lösung umfassend ein magnetisches Material, das mit einer Siliziumdioxid-basierten Schicht verbunden ist, einen magnetischen Mikropartikel mit einer Siliziumdioxid-basierten Oberfläche bildend, und ein "Layered Double Hydroxide", welches auf die Oberfläche des Mikropartikels aufgebracht ist.

2. Partikel nach Anspruch 1, wobei der Partikel einen Gehalt des "Layered Double Hydroxide" von etwa 5 bis etwa 65 Gew.-%, vorzugsweise etwa 20 bis etwa 60 Gew.-%, weiter bevorzugt etwa 20 Gew.-% bis etwa 40 Gew.-%, am meisten bevorzugt etwa 20 Gew.-% oder etwa 40 Gew.-% hat.

3. Partikel nach Anspruch 1 oder 2, wobei das "Layered Double Hydroxide" auf die Oberfläche des Mikropartikels mittels Ultraschallbehandlung aufgebracht ist.

4. Partikel nach einem der Ansprüche 1 bis 3, wobei der Partikel eine spezifische Oberfläche von etwa 10 bis etwa 500 m²/g, vorzugsweise etwa 60 bis etwa 350 m²/g, weiter bevorzugt etwa 70 bis etwa 250 m²/g, noch weiter bevorzugt etwa 80 bis etwa 110 m²/g, am meisten bevorzugt etwa 90 bis etwa 110 m²/g hat.

5. Partikel nach einem der Ansprüche 1 bis 4, wobei der Partikel einen Durchmesser von etwa 1 bis etwa 100 µm, vorzugsweise etwa 1 bis etwa 70 µm, weiter bevorzugt etwa 1 bis etwa 55 µm hat.

6. Partikel nach einem der Ansprüche 1 bis 5, wobei das magnetische Material ein weichmagnetisches oder ein superparamagnetisches Material ist.

7. Verfahren zum Herstellen eines magnetischen Partikels, umfassend die Schritte:
a) Mischen eines magnetischen Mikropartikels mit einer Siliziumdioxid-basierten Oberfläche in einer wässrigen Lösung bei einem pH-Wert von etwa 7 mit einer Dispersion von "Layered Double Hydroxide" bei einem pH-Wert von etwa 7, um ein Gemisch zu erhalten; und
b) Behandeln des Gemischs mit Ultraschall zum Aufbringen des "Layered Double Hydroxide" auf die Oberfläche des Mikropartikels.

8. Verfahren nach Anspruch 7, wobei Schritt a) für etwa 60 bis etwa 100 Sekunden, vorzugsweise für etwa 100 Sekunden durchgeführt wird.

9. Verfahren nach Anspruch 7 oder 8, wobei Schritt b) in einer kontinuierlich durchflossenen Ultraschallkammer durchgeführt wird, vorzugsweise für etwa 5 Sekunden.

10. Verfahren nach einem der Ansprüche 7 bis 9, wobei Schritt a) und/oder Schritt b) bei Raumtemperatur durchgeführt wird, wobei vorzugsweise Schritt a) und Schritt b) bei Raumtemperatur durchgeführt werden.

11. Verfahren nach einem der Ansprüche 7 bis 10, wobei die Dispersion des "Layered Double Hydroxide" durch Rühren von Metallsalzen, vorzugsweise Metalichloriden, in Natriumhydroxid synthetisiert wird, wobei das Rühren vorzugsweise für etwa 5 Minuten bei Raumtemperatur durchgeführt wird.

12. Verwendung des Partikels nach einem der Ansprüche 1 bis 6 zum Rückgewinnen eines Anions, vorzugsweise eines Phosphat-Anions, aus einer wässrigen Lösung.

13. Verwendung des Partikels nach einem der Ansprüche 1 bis 6 zum Katalysieren einer chemischen Reaktion durch heterogene Katalyse.

14. Verwendung des Partikels nach einem der Ansprüche 1 bis 6 als einen Träger für ein biochemisches Molekül, vorzugsweise ein Enzym, das auf dem "Layered Double Hydroxide" immobilisiert ist.

## Revendications

1. Particule servant à récupérer un anion à partir d'une solution aqueuse comprenant un matériau magnétique associé à une couche à base de silice formant une microparticule magnétique avec une surface à base de silice, et un hydroxyde double lamellaire déposé sur la surface de la microparticule.

2. Particule de la revendication 1, la particule ayant une teneur en hydroxyde double lamellaire d'environ 5 à environ 65 % en poids, de préférence environ 20 à environ 60 % en poids, plus préférablement environ 20 % en poids à environ 40 % en poids, de manière encore plus préférée environ 20 % en poids ou environ 40 % en poids.

3. Particule de la revendication 1 ou 2, dans laquelle l'hydroxyde double lamellaire est déposé sur la surface de la microparticule par traitement par ultrasons.

4. Particule de l'une quelconque des revendications 1 à 3, la particule ayant une surface spécifique d'environ 10 à environ 500 m²/g, de préférence environ 60 à environ 350 m²/g, plus préférablement environ 70 à environ 250 m²/g, plus préférablement encore environ 80 à environ 110 m²/g, de manière encore plus préférée environ 90 à environ 110 m²/g.

5. Particule de l'une quelconque des revendications 1 à 4, la particule ayant un diamètre d'environ 1 à environ 100 µm, de préférence environ 1 à environ 70 um, plus préférablement environ 1 à environ 55 µm.

6. Particule de l'une quelconque des revendications 1 à 5, dans laquelle le matériau magnétique est un matériau magnétique doux ou un matériau superparamagnétique.

7. Procédé de fabrication d'une particule magnétique, comprenant les étapes consistant à :
a) mélanger une microparticule magnétique avec une surface à base de silice dans une solution aqueuse à environ pH 7 avec une dispersion d'hydroxyde double lamellaire à environ pH 7 pour obtenir un mélange ; et
b) traiter le mélange par ultrasons pour déposer l'hydroxyde double lamellaire sur la surface de la microparticule.

8. Procédé de la revendication 7, dans lequel l'étape a) est effectuée pendant environ 60 à environ 100 secondes, de préférence pendant environ 100 secondes.

9. Procédé de la revendication 7 ou 8, dans lequel l'étape b) est effectuée dans une cellule à ultrasons à écoulement continu, de préférence pendant environ 5 secondes.

10. Procédé de l'une quelconque des revendications 7 à 9, dans lequel l'étape a) et/ou l'étape b) sont effectuées à température ambiante, de préférence l'étape a) et l'étape b) sont effectuées à température ambiante.

11. Procédé de l'une quelconque des revendications 7 à 10, dans lequel la dispersion d'hydroxyde double lamellaire est synthétisée en agitant des sels métalliques, de préférence des chlorures métalliques, dans de l'hydroxyde de sodium, l'agitation étant de préférence effectuée pendant environ 5 minutes à température ambiante.

12. Utilisation de la particule de l'une quelconque des revendications 1 à 6 pour la récupération d'un anion, de préférence un anion phosphate, à partir d'une solution aqueuse.

13. Utilisation de la particule de l'une quelconque des revendications 1 à 6 pour la catalyse d'une réaction chimique par catalyse hétérogène.

14. Utilisation de la particule de l'une quelconque des revendications 1 à 6 comme support pour une molécule biochimique, de préférence une enzyme, immobilisée sur l'hydroxyde double lamellaire.
